# EUROPEAN PATENT APPLICATION

(11) **EP 2 109 119 A1**
(43) Date of publication of application: **14.10.2009**
(21) Application number: 08405098.8
(22) Date of filing: 07.04.2008
(51) Int. Cl.: H01F 1/01, F25B 21/00

(54) **A permeable-magnetocaloric material and a magnetic refrigerator, a heat pump or a power generator using this material**

(71) Applicant: Haute Ecole d'Ingénierie et de Gestion du Canton de Vaud (HEIG-VD), 1400 Yverdon-Les-Bains (CH)
(72) Inventor: Kitanovski, Andrej, 1000 Ljubljana (SI); Vuarnoz, Didier, 1003 Lausanne (CH); Egolf, Peter W., 5702 Niederlenz (CH)
(74) Representative: Nithardt, Roland

(57) **Abstract**

The invention concerns a permeable-magnetocaloric material designed for an application in thermo-magnetic devices such as magnetic refrigerators, magnetic heat pumps or magnetic power generators. This permeable-magnetocaloric material (10a) comprises an hybrid material including at least one soft magnetic permeable material consisting of particles (11a) embedded in a magnetocaloric material (12a). The particules (11a) present a disk or sphere shape, and first sizes which may be in the range of one to several hundred millimeters.

## Description

### Technical Field

The present invention concerns a permeable-magnetocaloric material for a magnetic refrigerator, a heat pump or a power generator comprising at least a magnet assembly for the generation of a magnetic field, a body disposed at least partially in said magnetic field, a porous structure mounted inside said body and containing a permeable-magnetocaloric material and means for conducting a working fluid through said body.

It concerns also a magnetic refrigerator, a heat pump or a power generator comprising at least a magnet assembly for the generation of a magnetic field, a body disposed at least partially in said magnetic field, a porous structure mounted inside said body and means for conducting a working fluid through said body.

### Background Art

Research and development of magnetic refrigeration technologies, as a main part of thermo-magnetic systems technology, led from more simple to complexer magnet assemblies. In newer designs the magnetic flux does not flow through the magnetocaloric material only in a one-dimensional homogeneous flow, but instead it is very often focussed in spots or partial regions of the material with a streaming in due to the convergence of magnetic field lines from all three spatial directions. A most famous example of a 2-dimensional magnetic flux line concentration is given by a Halbach array. The use of soft magnetic permeable materials is well known in the field of magnetism and its applications. A main application is the insertion of such materials in permanent magnet assemblies, where soft magnetic material is applied together with permanent magnets for a magnetic flux concentration.

Another domain is the application of such materials for a magnetic shielding in order to prevent magnetic flux leakage. In the domain of magnetocaloric materials research, development and application of a layering with different types of such materials, which are adapted to the temperatures, repectively its gradients, has also been applied in the past ten years. Such solutions substantially improve the efficiency of e.g. magnetic refrigerators, magnetic heat pumps and magnetic power conversion machines. Up to date in design and building of magnetic refrigeration/heat pump equipment the layering technique was only performed on a macroscopic scale. Despite of some improvements, the problem of increasing the magnetic flux density in magnetocaloric materials still remains a very important task. A very high magnetic flux density leads to a better utilization of the magnetocaloric effect, which is crucial for a good efficiency of any thermo-magnetic device. Often in such machines very large volumes of e.g. the permanent magnet assemblies are required. This substantially effects the volume, mass and also price of such a device. Therefore, any improvement of a magnetic field increase is of high importance.

The PCT international patent application published under Nr. WO 2007/048243 proposes the application of a "shimmed" magnetic regenerator. The idea is to place certain "shim" materials together with magnetocaloric regenerator porous structures in order to improve "the effective magnetization". Despite this invention may improve the magnetization, the placement and mass of shims is restricted by the shape of the magnetocaloric structure and the specifications of a device. Generally speaking it shows strong limits, especially also because of its large-scale nature. A porous structure has defined limits concerning the heat transfer and its fluid dynamics properties. Any "shim" or large-scale placement inside such a structure presents an obstacle for the fluid flow, acts as an insulator for the heat transport and transfer or leads to a undesired large heat capacity. The contact between a "shim" and the basic material in which it is imbedded may lead to gaps, which negatively influence the thermodynamic and fluid dynamic behavior. Furthermore, and this is even more drastic, it may also cause a substiantial reduction of the occuring magnetic flux density. The proposed solution does not solve the problem of an efficient utilization of the magnets. To explain this in more detail, the porous structure of a thermo-magnetic device requires some fraction of empty volume. These domains are necessary for the working fluid to pass through the structure. But now also the magnetic flux is passing through this fluid containg voids, and this presents a kind of magnetic flux leakage. Instead of crossing the magnetocaloric material the flux lines are found in these fluid containg gaps, where they do not contribute to the magnetization of the magnetocaloric material. The less magnetic flux lines pass through fluid containing volumes, the more they may be concentrated in the magneto caloric material, which is exactly the desired process.

### Disclosure of Invention

Numerical simulations of magnetic fields, with a very high resolution, have shown that a concept to substantially increase the magnetic flux density in a magnetocaloric material should not be based on macroscopic structures in the regenerator of a thermo-magnetic device. Much more effective is a development of a special hybrid material, which may have medium sized particles down to micro particles or even nano particles. But still, their overall or macroscopic observable effect is a good magnetocaloric and at the same time high-permeable material behavior. Finally, the hybrid material may be positioned and shaped, e.g. into a porous structure of a thermo-magnetic device.

This invention is based on an idea of performing an hybrid material, namely a combination of permeable and magnetocaloric material. This hybrid material enables an enhancement of the magnetic flux density in a certain or the total volume of its bulk. Preferably the permeable material has a high or a very high permeability. It is known that the maximal magnetocaloric effect occurs at Curie temperature, which is for most magnetocaloric materials usually a point of magnetic transition, namely between its ferromagnetic and paramagnetic state. However such magnetocaloric materials behave in their paramagnetic state similar as pure air or vacuum, with the result that they loose their capabilites of showing high magnetic permeabilities. Furthermore, even in the ferromagnetic state such materials do not show high magnetic permeabilities, compared to e.g. those of soft magnetic materials, which are used for magnet jokes in permanent magnets or for magnetic shielding purposes. Therefore, it is rather difficult to perform a good concentration of magnetic flux lines in magnetocaloric materials even if soft permeable materials are used in a combination with magnet assemblies or in a combination with magnetocaloric regenerators. In thermo-magnetic systems such as magnetic refrigerators, magnetic heat pumps and magnetic power generators it is very important to have high magnetic flux densities. The addition of high-permeable material increases the magnetic flux line density. On the other hand its volume fraction decreases the volume fraction of magnetocaloric material. Therefore, the optimal ratio of permeable and magnetocaloric material must be correctly determined for each application.

The higher the enhancement of the magnetic flux density is, the less magnetic flux line leakage will occur. Furthermore, also the efficiency, due to the higher magnetocaloric effect, that means higher adiabatic entropy change in a higher magnetic field, may be increased.

Therefore, the permeable-magnetocaloric material according to the invention and such defined in preamble is characterized in that said permeable-magnetocaloric material comprises an hybrid material including at least one soft permeable-magnetic material and at least one magnetocaloric material.

According to a preferred realization of the permeable-magnetocaloric material of the invention, the soft permeable-magnetic material is made of particles performed with a coating that presents an electric insulator preventing the occurrence of eddy currents.

The hybrid material contains advantageously an additional third basic material that presents an electric insulator.

The permeable-magnetocaloric material of the invention may be manufactured as an alloy, sintered material or a similar structured material that enables the two basic materials to exhibit a high magnetic permeability.

The permeable-magnetocaloric material may exhibit a magnetic permeability which is higher than the magnetic permeability of a single magnetocaloric material.

The soft permeable-magnetic material may be formed of particles, pieces or crystals of different shapes and sizes ranging from scales between at least one Angström and several centimeters.

The magnetocaloric material is advantageously formed of particles or pieces or crystals of different shapes and sizes ranging from scales between at least one Angström and several centimeters.

The electric insulator material may be formed of particles, pieces or crystals of different shapes and sizes ranging from scales between at least one Angström and several centimeters.

The invention also concerns a magnetic refrigerator, heat pump or power generator as defined in preamble and characterized in that said porous structure includes at least a permeable-magnetocaloric hybrid material comprising at least one soft permeable-magnetic material and at least one magnetocaloric material.

### Brief Description of Drawings

The invention will now be described, by way of examples, with reference to the accompanying drawings, in which :
Figures 1A to 1I show examples of patterns of the permeable-magnetocaloric material according to the invention, and
Figures 2A, 2B and 2C show the application of the permeable-magnetocaloric material of the invention, which for example forms the porous structure positioned in the magnetic field domain of an open-type Halbach magnet.

### Modes for Carrying Out the Invention

The permeable-magnetocaloric material according to the invention is designed for an application in thermo-magnetic devices such as magnetic refrigerators, magnetic heat pumps or magnetic power generators. This permeable-magnetocaloric material comprises an hybrid material including at least one soft magnetic permeable material and at least one magnetocaloric material. The soft magnetic permeable material preferably has a very low magnetic hysteresis and a high saturation field. The size, shape and volume fraction of the soft permeable material particles as well as those of the magnetocaloric material depend on the specific application under consideration. The method of manufacturing, the shape, the size of particles and the material fractions should be chosen in such a manner that the permeable-magnetocaloric material shows a high permeability and good magneto caloric effect. The specific properties of each of these two different materials should not be lost by the manufacturing process or other additional treatments.

The soft magnetic permeable material particles shall be homogenously or non-homogeneously dispersed in the overall hybrid material. Their location and geometrical orientation should be chosen in such a manner that the permeable material particles do not yield "islands" containing high magnetic flux densities within the hybrid material. If the general properties of the hybrid material, which are the high permeability and the magneto caloric effect, will not be damaged by the manufacturing process, then such a material will present a high permeable and highly performant magnetocaloric alloy, sintered material or other kind of composite or material structure. Particles of both basic materials (e.g. soft permeable and magnetocaloric) may be in a large range from small scales, from one Angstrom up to larger scales of a characteristic size of the material domain. The hybrid material may also comprise other additional basic materials (beside the magnetocaloric and the soft magnetic permeable material), which e.g. serves as an electric insulator in order to prevent eddy currents, which may occur due to the varying magnetic fields. Numerical simulations of specific cases have shown that it is possible to increase the magnetic flux density within the volume of the magnetocaloric particles by 0.2-0.5 Tesla per 10% increase of volume fraction of permeable material in the overall hybrid material. By the idea of this invention the effect of a magnetic field source (e.g. permanent magnets) is increased, because the magnetic flux is focused into the hybrid material in an excellent manner and does not penetrate into the empty spaces, which are conventionally foreseen to be occupied by a working fluid.

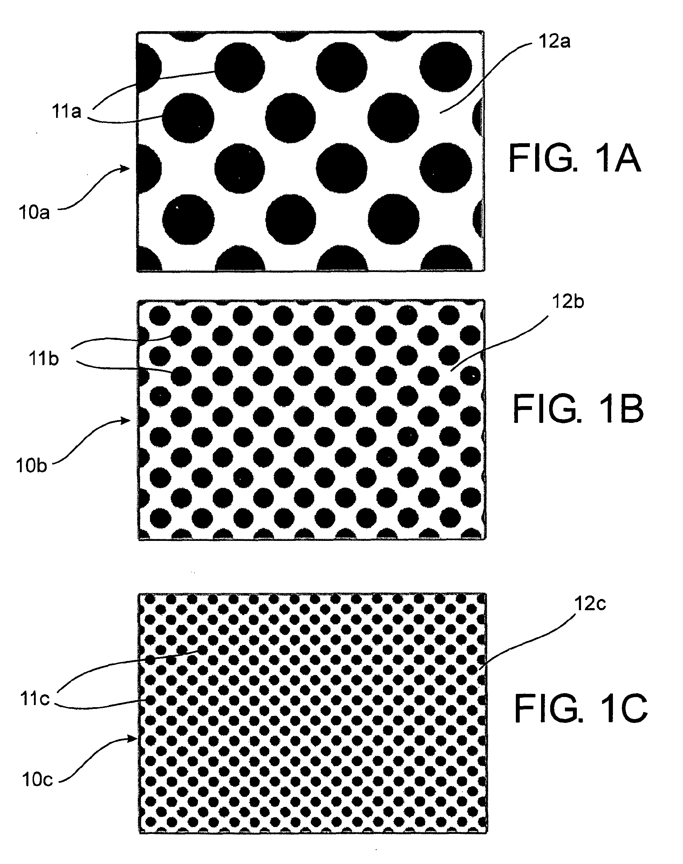

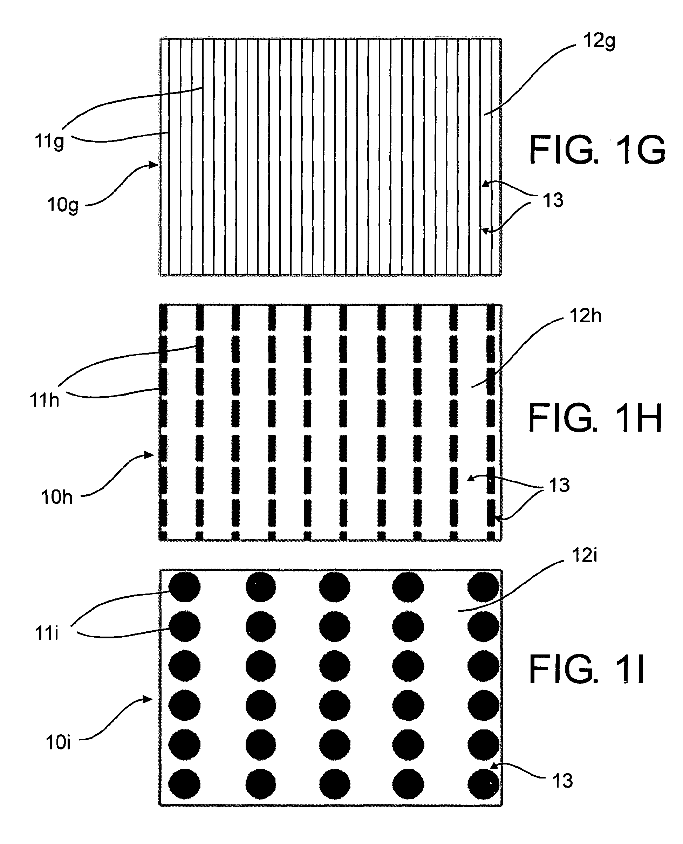

Figure 1A shows a first example of a pattern of an permeable-magnetocaloric material 10a, which consists of particles 11a of a soft permeable material embedded in a magnetocaloric material 12a. It is to be noted that said particules 11a present a first disk or sphere shape, and first sizes which may be in the range of one to several hundred millimeters.

Figure 1B shows a second example of a pattern of a permeable-magnetocaloric material 10b, which consists of particles 11b of a soft permeable material embedded in a magnetocaloric material 12b. It is to be noted that said particules 11b present a similar shape but smaller sizes than those of the particles 11a.

Figure 1C shows a third example of a pattern of a permeable-magnetocaloric material 10c, which consists of particles 11c of a soft permeable material embedded in a magnetocaloric material 12c. It is to be noted that said particules 11c present a similar shape but smaller sizes than those of the particles 11a and 11b.

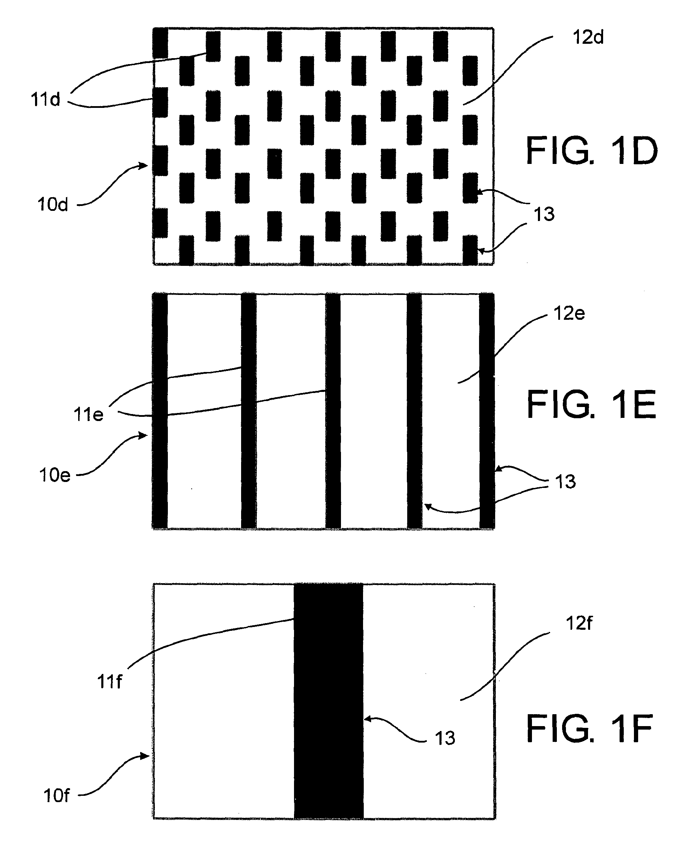

Figure 1D shows a fourth example of a pattern of a permeable-magnetocaloric material 10d, which consists of particles 11d of a soft permeable material embedded in a magnetocaloric material 12d. It is to be noted that said particles 11d present a different shape than the particles 11a, 11b and 11c. The particles 11d have the shape of segments of a straight line and are disposed along parallel lines 13d.

Figure 1E shows a fifth example of a pattern of a permeable-magnetocaloric material 10e, which consists of particles 11e of a soft permeable material embedded in a magnetocaloric material 12e. It is to be noted that said particles 11e present a similar shape than the particles 11d. The particles 11e have the shape of parallel segments of a straight line or of straight lines 13e. The size of these particles is greater than that of the particles 11d.

Figure 1F shows a sixth example of a pattern of a permeable-magnetocaloric material 10f, which consists of particles 11f of a soft permeable material embedded in a magnetocaloric material 12f. It is to be noted that said particles 11f present a similar shape than the particles 11e. These particles have the shape of parallel segments of a straight line or of straight lines 13f. The size of the particles 11f is greater than that of the particles 11e. The particles 11f may have the shape of a single line 13f.

Figure 1G shows a seventh example of a pattern of a permeable-magnetocaloric material 10g, which consists of particles 11g of a soft permeable material embedded in a magnetocaloric material 12g. It is to be noted that said particles 11g present a similar shape than the particles 11e. The particles 11g have the shape of a parallel straight line or of straight lines 13g.

Figure 1H shows a eighth example of a pattern of a permeable-magnetocaloric material 10h, which consists of particles 11h of a soft permeable material embedded in a magnetocaloric material 12h. It is to be noted that said particles 11h present a different shape than the particles 11g. The particles have the shape of parallel dotted lines 13h.

Figure 1I shows a nineth example of a pattern of a permeable-magnetocaloric material 10i, which consists of particles 11i of a soft permeable material embedded in a magnetocaloric material 12i. It is to be noted that said particles 11i present a different shape than the particles 11h. These particles 11i have the shape of circular elements disposed along parallel lines 13i.

Furthermore, it is also possible of influencing the crystal structure of the hybrid material in such a manner that certain crystals present the high permeability and others the high magnetocaloric effect. Small scale particles, because of their smallness, cannot be shown in the figures. Figures 1A to 1I, therefore, show only a small part of the possible patterns of a permeable-magnetocaloric material, because there exist a very large number tailored for different specific applications. The size of the particles may be comprised between approximately one Angström and several centimeters.

If the general properties of the hybrid material, which are a high permeability and a good magneto caloric effect, are not damaged by the manufacturing process, such materials are alloys, sintered materials or some other kind of composites or structured materials. Particles of both basic materials, e.g. magnetocaloric and soft permeable material, may be in a range of smaller scales, from Angströms to several centimeters.

When an hybrid material is in a varying magnetic field, it may happen that eddy currents occur. In order to prevent this, a special coating, which has the property of an electric insulator, may be placed around the soft permeable particles or in other positions to optimally prevent the occurrence of eddy currents. If the soft permeable particles do not enable such a coating then electric insulator material may be added as a third basic material (beside the soft magnetic permeable and the magnetocaloric one). In this case the objective is to position the particles in a manner to prevent the occurrence of eddy currents.

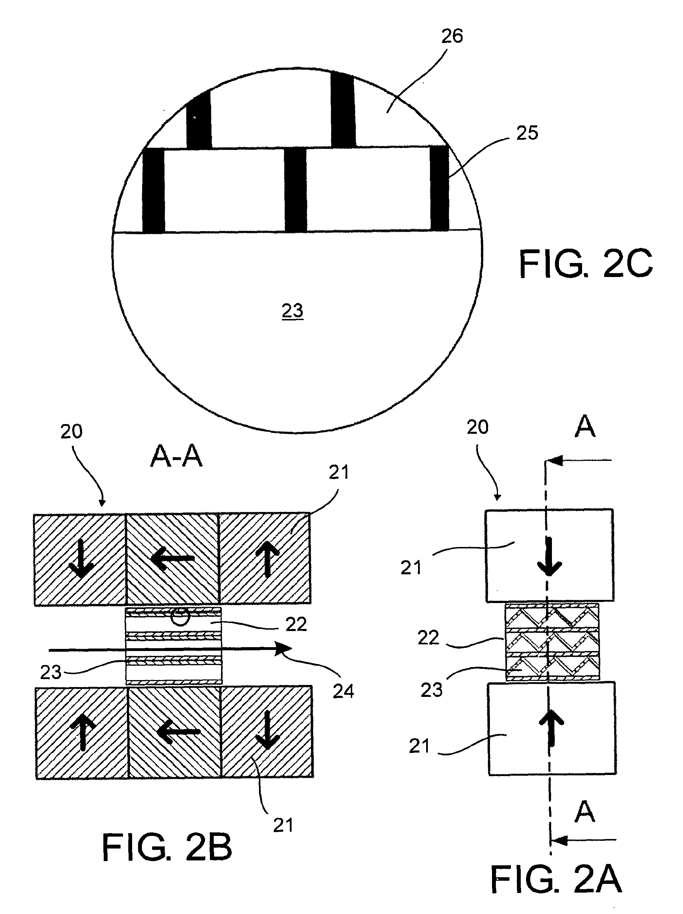

Figures 2A, 2B and 2C present a device 20 which may be a magnetic refrigerator, a heat pump or a power generator. This device represents an example of an application of the proposed permeable-magnetocaloric material according to the invention. In this special case, the permeable-magnetocaloric material is shaped to perform a kind of a periodic porous structure, which is placed in the magnetic field. The magnetic field for this case is produced by the permanent magnet's assembly based on an open Halbach type of magnet.

The purpose of these figures is to show that in certain magnet assembly, which in general is not necessarily composed of permanent magnets, the magnetic flux path is much more complex than in a simple, e.g. a horseshoe magnet configuration. In such complex magnet assemblies there is a requirement of an additional helping mechanism to attract the magnetic flux into the desired volume. This however may be performed by an application of a permeable-magnetocaloric material as it is proposed in this invention. Without using such material the magnetic flux leakage into non-desired areas of the space will be much higher.

Figures 2A and 2B represent a device 20 showing an example of a magnetic refrigerator, heat pump or power generator of the invention. This device 20 comprises at least a magnet assembly 21 for the generation of a magnetic field, a body 22 disposed at least partially in said magnetic field, a porous structure 23 mounted inside said body 22 and means 24 for conducting a working fluid through said body.

Figure 2C represents an increased view of a part of the porous structure 23 of the device 20. This porous structure 23 is performed with a permeable-magnetocaloric material comprising an hybrid material including a soft permeable-magnetic material 25 and a magnetocaloric material 26.

It will be noted that the structure of the hybrid material may be of different kind of shapes, dimensions and distributions. For the purpose of making a good illustration of this application, soft permeable particles are presented in rather larger or not to say too large size.

The higher the complexity of the magnetic flux flow from the magnet assembly toward the area to be magnetized is, the higher the efficiency of using an hybrid material will be. This is especially the case, because in such configurations usually the magnetic flux is not homogeneously distributed over the entire volume.

## Claims

1. A permeable-magnetocaloric material for a magnetic refrigerator, a heat pump or a power generator comprising at least a magnet assembly for the generation of a magnetic field, a body disposed at least partially in said magnetic field, a porous structure mounted inside said body and containing a permeable-magnetocaloric material, and means for conducting a working fluid through said body, **characterized in that** said permeable-magnetocaloric material (10a; 10b; 10c; 10d; 10e; 10f; 10g; 10h; 10i) comprises an hybrid material including at least one soft permeable-magnetic material (11a; 11b; 11c; 11d; 11e; 11f; 11g; 11h; 11i) and at least one magnetocaloric material (12a; 12b; 12c; 12d; 12e; 12f; 12g; 12h; 12i).

2. A permeable-magnetocaloric material according to claim 1, **characterized in that** the soft permeable-magnetic material is made of particles (11a; 11b; 11c; 11d; 11e; 11f; 11g; 11h; 11i) performed with a coating that presents an electric insulator preventing the occurrence of eddy currents.

3. A permeable-magnetocaloric material according to claim 1, **characterized in that** the hybrid material contains an additional third basic material that presents an electric insulator.

4. A permeable-magnetocaloric material according to claim 1, **characterized in that** it is manufactured as an alloy, sintered material or a similar structured material that enables the two basic materials to exhibit a high magnetic permeability.

5. A permeable-magnetocaloric material according to claim 1, **characterized in that** said hybrid material exhibits a magnetic permeability which is higher than the magnetic permeability of a single magnetocaloric material.

6. A permeable-magnetocaloric material according to claim 1, **characterized in that** the soft permeable-magnetic material (11a; 11b; 11c; 11d; 11e; 11f; 11g; 11h; 11i) is formed of particles, pieces or crystals of different shapes and sizes ranging from scales between at least one Angstrom and several centimeters.

7. A permeable-magnetocaloric material according to claim 1, **characterized in that** the magnetocaloric material (12a; 12b; 12c; 12d; 12e; 12f; 12g; 12h; 12i) is formed of particles or pieces or crystals of different shapes and sizes ranging from scales between at least one Angström and several centimeters.

8. A permeable-magnetocaloric material according to claim 3, **characterized in that** the electric insulator material is formed of particles, pieces or crystals of different shapes and sizes ranging from scales between at least one Angström and several centimeters.

9. A magnetic refrigerator (20) comprising at least a magnet assembly (21) for the generation of a magnetic field, a body (22) disposed at least partially in said magnetic field, a porous structure (23) mounted inside said body and means (24) for conducting a working fluid through said body, **characterized in that** said porous structure includes at least a permeable-magnetocaloric material according to at least one of the claims 1 to 8.

10. A heat pump comprising (20) at least a magnet assembly (21) for the generation of a magnetic field, a body (22) disposed at least partially in said magnetic field, a porous structure (23) mounted inside said body and means (24) for conducting a working fluid through said body, **characterized in that** said porous structure includes at least a permeable-magnetocaloric material according to at least one of the claims 1 to 8.

11. A power generator (20) comprising at least a magnet assembly (21) for the generation of a magnetic field, a body (22) disposed at least partially in said magnetic field, a porous structure (23) mounted inside said body and means (24) for conducting a working fluid through said body, **characterized in that** said porous structure includes at least a permeable-magnetocaloric material according to at least one of the claims 1 to 8.
